# EUROPEAN PATENT SPECIFICATION

(11) **EP 2 068 250 B1**
(45) Date of publication and mention of the grant of the patent: **17.02.2016**
(21) Application number: 07290727.2
(22) Date of filing: 08.06.2007
(51) Int. Cl.: G06F 13/24

(54) **Method and apparatuses for communicating a message received from a main processor to a peripheral device**
Verfahren und Vorrichtungen für das Übertragen einer vom Hauptprozessor empfangenen Nachricht zu einem Peripheriegerät
Méthode et dispositifs pour communiquer un message reçu d'un processeur principal vers un dispositif périphérique

(43) Date of publication of application: 10.06.2009
(73) Proprietor: Motorola Mobility LLC, Libertyville, IL 60048 (US)
(72) Inventor: Baills, Stephane L., 31400 Toulouse (FR); Bedouet, Pascal, 31200 Toulouse (FR); Rafin, Jeremie, 31400 Toulouse (FR)
(74) Representative: Boult Wade Tennant

(56) References cited:
- WO-A-2006/027026
- US-A1- 2005 265 507
- US-A1- 2006 010 264
- FLIK T: "Mikroprozessortechnik - 8 - EIN-/AUSGABESTEUEREINHEITEN, PERIPHERIEBUSSE UND HINTERGRUNDSPEICHER" MIKROPROZESSORTECHNIK, XX, XX, 2001, pages 516-529, XP002383180

## Description

### Field of the Invention

This invention relates to a message handling arrangement for a communication device, a communication device and method of handling messages in a communication device.

### Background of the Invention

Typically, the operation of a communication device is governed by an event or a sequence of events processed in the communication device in a time accurate manner and thus, in order to provide proper operation of the communication device, the timing of the event and events is controlled by a timer.

In wireless communication systems, communication occurs via radio communication links between a network comprising a plurality of base stations (BSs) arranged in cells and a plurality of wireless communication devices, often termed mobile stations (MSs). The MS may be a portable or mobile telephone, a Personal Digital Assistant (PDA), a wireless video or multimedia device, a portable computer, or the like. The operation of the MS is determined at the physical interface level by radio-air interface events such as monitoring, receiving or transmitting over a spectrum allocation of a serving cell or neighbouring cells. These radio-air interface events may translate in turn into some programming and/or reconfiguring events such as, for example, baseband clock desense control, MS time base re-alignment, over-sampling rate dynamic setting, multiple antenna selection, or RF Chipset transfer clock speed selection. The MS includes a timer, typically known as a layer one timer, which controls the timing and synchronisation of the events and processes in the MS. For example, the layer one timer can assist in synchronising the MS with a BS to ensure that events are processed in a timely manner relative to the radio-air interface.

A MS typically comprises a RF front end block for providing the RF transmit and receive paths of the MS, a baseband block for processing baseband signals received from the RF front end block or to be transmitted by the RF front end block, and a processing unit for controlling the operation of the MS. The layer one timer is controlled by a baseband processor which may be part of or separate to the processing unit or may be part of the baseband block. The RF front end block comprises, for example, the power amplifier circuitry, IF synthesizer and mixers, low noise amplifiers, filters. The baseband block includes, for example, baseband peripheral devices such as the baseband peripheral devices involved in the RF modem functionality including Digital PLL (DPLL) circuitry for the purpose of aligning the Layer 1 Timer reference to the BS should the reference clock from the RF front end block not be automatically frequency corrected (AFC), or to trim the baseband clock tree as a function of the spectrum allocation on the air-interface, BaseBand Port (BBP) for the purpose of transferring the digital signal samples to and from the RF front end block, General Purpose Input/Output (GPIO) devices for switching amongst multiple antenna depending on the air-interface access spectrum allocation.

US patent no. US2005/0265507 describes timing of events in a wireless communication device using a layer one timer. One of the features of a layer one timer is an event table, which can support, for example, one or more macro tables. A macro table can be used to define a fixed sequence of events and are considered useful because they minimise the amount of software interaction required with the layer one timer. This reduces overhead on the processing unit which controls the layer one timer. In particular, this US patent describes how the timing of the events can be adapted in real-time. In other words, how the execution of a macro table can be terminated at a time which is programmable in real-time.

This US patent does not however describe how the macro tables can be reprogrammed which would enable the MS elements required for an event to be controlled or reconfigured in real-time.

Real-time control of RF front end elements is known. Such control is implemented by way of the layer one timer and a message handler, such as, for example, a Serial Interface unit, a Direct Memory Access (DMA) unit, or a standard protocol unit such as 2G DigRF or 3G DigRF. The baseband processor posts a message for an RF front end element, which message defines the configuration or control of the RF front end element, to the message handler and the layer one timer times the handling of the message to ensure programming of the RF front end element according to the message at the appropriate time.

As the functionality of MSs becomes more complex, there is a greater need to be able to control or reconfigure the baseband peripheral devices in real-time, including the layer one timer and the message handler themselves.

The baseband peripherals are typically reconfigured where possible via the baseband processor which processor is required to perform other baseband functions in addition to reconfiguring some of the baseband peripherals. Thus, in view of the limit to the processing capability of the baseband processor, it is difficult to control and reconfigure baseband peripherals in real-time and for some events, it is not possible to reconfigure the baseband peripherals via the baseband processor off a macro table due to the latency of software interrupts. For example, in order to reduce current drain, it is desirable to switch the sampling rate from 2x rate to 1x rate in the BBP baseband peripheral device where possible. The time to switch between sampling rates must be predictable for switching has to occur at a specific time prior to turning on the receiver line-up in the RF font end block, which can only be achieved by setting a very high priority to the interrupt. Due to high latency constraint of interrupts and the necessary finite time needed to be allocated in the macro table to perform the switch, it is not possible to reconfigure the BBP baseband to switch to the different sampling rate by way of interrupting the baseband processor through macro tables. Doing it via the baseband processor forces the reconfiguration to take place in between air-interface access, which is not possible for worst case scenarios, e.g. multi-mode communication devices combined accesses. Another example resides in the DPLL reconfiguration based on the channel of the air-interface where it would be desirable to re-program the DPLL prior to air-interface access; this is in essence not achievable through a generic macro table.

The two examples previously described apply to the receiver, but problems also arise for transmitter programming. For example, it might be desirable to control the operation of an antenna switch external to the RF transceiver off a macro table. However, this is not feasible since a macro table cannot operate based on channel variation (different bands).

Thus, there is a need to provide an improved mechanism for controlling or reconfiguring baseband peripheral devices in real-time.

### Summary of the Invention

In accordance with the present invention there is provided a message handling arrangement as claimed in claim 1 of the accompanying claims.

In accordance with another aspect of the present invention there is provided a processing arrangement as claimed in claim 2 of the accompanying claims.

In accordance with another aspect of the present invention there is provided a communication device as claimed in claim 7 of the accompanying claims.

In accordance with another aspect of the present invention there is provided a method of handling messages in a communication device as claimed in claim 8 of the accompanying claims.

### Brief Description of the Drawings

A message handling arrangement in accordance with the disclosure, a processing arrangement in accordance with the disclosure, a communication device in accordance with the disclosure and a method of handling messages in a communication device in accordance with the disclosure will now be described, by way of example only, with reference to the accompanying drawings in which:
FIG. 1 is a block schematic diagram of a typical communication device;
FIG. 2 is a schematic diagram showing the activity of different elements of the communication device of FIG. 1 over time during DPLL desense;
FIG. 3 is a block schematic diagram of a communication device including a message handling arrangement in accordance with an embodiment of the disclosure;
FIG. 4 is a schematic diagram showing the activity of different elements of the communication device of FIG. 3 over time during DPLL desense; and
FIG. 5 is a schematic diagram showing the activity of different elements of the communication device of FIG. 3 over time during changing of the sampling rate.

### Detailed Description of the Drawings

The present disclosure will be described with reference to a communication device, hereinafter referred to as a Mobile Station (MS), but it will be appreciated that the present disclosure may apply to any communication device, such as a portable or mobile telephone, a Personal Digital Assistant (PDA), a wireless video or multimedia device, a portable computer, or the like. It will be appreciated however that the present disclosure is applicable to any device whereby programming content is scheduled through software and effective programming is handled by a timer unit.

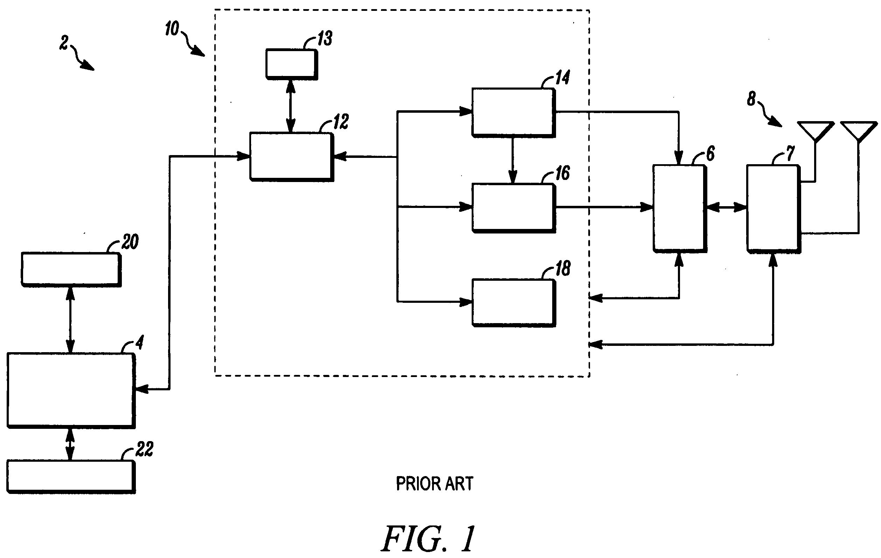

A diagram of the main functional components of a typical MS 2 is shown in FIG. 1. As will be apparent to a skilled person, only those functional components of the MS 2 that are necessary for an understanding of the disclosure have been shown and will be described.

The MS 2 comprises a processing unit 4 for carrying out operational processing for the MS. The MS 2 also includes RF front end block 6 and since the MS 2 is a multi-mode device, the MS 2 includes multiple antennas 8 (only two of which are shown in FIG. 1) for providing wireless communication with a BS (not shown) as is well known in the art. The RF front end block 6 typically includes an antenna switch (not shown) for switching between the transmit path and the receive path, a power amplifier (not shown), low noise amplifiers (not shown), IF synthesiser and mixers (not shown) and other elements for performing RF functions as will be known to a skilled person and thus will not be described further herein.

The MS 2 further comprises a RF switching block 7 typically including an antenna switch for switching between the multiple antenna paths for the aforementioned block 6 or any other transceiver within the communication device 2, as will be known to a skilled person and thus will not be described further herein.

The MS 2 further includes baseband block 10 comprising a baseband processor 12, a layer one timer 14, a message handler 16, such as a Serial Interface unit, and a plurality of baseband peripheral devices, only one 18 of which is shown in FIG. 1. In an embodiment, the baseband block 10 may further include memory 13 coupled to the baseband processor 12 for storing data and programs containing processor instructions for operation of the baseband processor 12. The baseband block 10 is coupled to and controlled by the processing unit 4 and is also coupled to the RF front end block 6 for processing the baseband signals received from or to be transmitted by the RF front end block 6. The baseband processor 12 may be a DSP such as DSP56600 supplied by Freescale Semiconductor, Inc.. In other embodiments, the baseband processor 12 may be part of the processing unit 4 or the processing unit 4 may be part of the baseband block 10.

The MS 2 also has a Man Machine Interface MMI 20, including elements such as a key pad, microphone, speaker, display screen, for providing an interface between the MS and the user of the MS. The MMI 20 is also coupled to the processing unit 4.

The MS 2 further comprises a program memory 22 in which is stored programs containing processor instructions for operation of the MS 2. The program memory 22 is shown in FIG. 1 as a separate component of the MS 2 to the processing unit 4 but may be part of the processing unit itself. The programs in the program memory 22 may contain a number of different program elements or sub-routines containing processor instructions for a variety of different tasks, for example: for exchanging signals with the base station to establish a communication, for sending or receiving speech, text, multimedia or other data, for communicating with the user via the MMI 20.

The layer one timer 14 is programmed to time the execution of events or processes in the MS 2 via the baseband processor 12. For example, the layer one timer 14 can assist in synchronising the operation of the MS 2 with a BS (not shown). As discussed in the introduction, one of the features of a layer one timer is an event table, which can support, for example, one or more macro tables. A macro table can be used to define the timing for a fixed sequence of events and event codes which specify the action that is to be executed. As a macro table for an event is executed by the layer one timer 14, the layer one timer 14 generates timing signals which are transmitted to the RF front end block 6 at the appropriate time and/or trigger signals which are transmitted to the message handler 16 at the appropriate time, depending on the event. US patent no. 2005/0265507 provides more details as to the operation of a layer one timer.

The message handler 16 receives messages from the baseband processor 12 and acts as a memory stack holding messages posted by the baseband processor 12 until they are fetched for processing in response to the receipt of a trigger signal from the layer one timer 14. The messages include operation data for controlling the operation of or functionality of an RF element of the RF front end block 6 for an event. In the arrangement of FIG. 1, the messages from the message handler 16 are only sent to the RF front end block 6 via Serial-to-Parallel Interface (SPI) blocks (not shown).

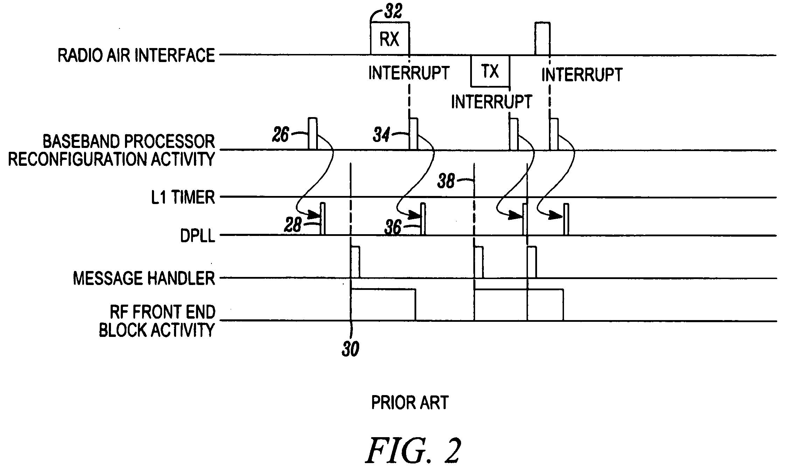

In order to describe the layer one timer 14, message handler 16, baseband processor 12 in more detail, a brief description of the steps that take place during an event involving DPLL desense will now be given with reference to FIG. 1 and FIG. 2. FIG. 2 is a timing diagram showing the activity at different elements of the MS 2 at different times during an event requiring DPLL desense. Peripheral device 18 in this example is the DPLL peripheral device.

Due to a change in conditions such as, for example, display unit activity, adjacent RF communication device, or simply because the spectrum allocation accessed is known to interfere with the baseband clock distribution, and in order to avoid harmonics interfering with the desired RF signal which results in the desense of the receiver part of the RF front end block 6, the configuration of a baseband DPLL peripheral device 18, is required to be modified in order to avoid desense of the receiver part. This is known as a DPLL desense operation.

On the occurrence of an event which requires a DPLL desense operation, the baseband processor 12 is interrupted at time 26 on FIG. 2 in order that the baseband processor 12 can program the baseband DPLL registers (not shown) which govern the operation of the baseband DPLL peripheral device 18 with the appropriate operating conditions at time 28. The layer one timer 14 is programmed to time the reconfiguration or programming of the RF front end block 6 for a receive operation and at time 30 generates a trigger signal which is transmitted to the message handler 16. Message handler 16 provides at time 30 messages to the RF front end block 6 in order to control the operation of the RF receive elements of the RF front end block 6 for a receive operation. At time 32, the MS receives a RF signal over the radio-air interface and in view of the changes made to the configuration of the baseband DPLL peripheral device 18 prior to receipt, interference on processing of the received RF signal is minimised. The MS 2 is arranged to perform a DPLL desense operation before and after a receive operation and thus, at time 34, the baseband processor 12 is interrupted in order that the baseband processor 12 can program the baseband DPLL registers (not shown) which govern the operation of the baseband DPLL peripheral device 18 with the appropriate operating conditions at time 36. The layer one timer 14 is also programmed to time the reconfiguration or programming of the RF front end block 6 for a transmit operation and at time 38 generates a trigger signal which is transmitted to the message handler 16 in order to control the operation of the RF transmit elements of the RF front end block 6 for a transmit operation

As can be seen in FIG. 2, in order to control DPLL desense, the baseband processor 12 is required to be interrupted in order to program the baseband DPLL peripheral device which takes up processing time of the baseband processor 12.

Other examples of operations that require time accurate control of baseband peripheral devices includes:
a) Tuned antenna with multiple band dependencies which operation requires the antenna to be switched to different bands at appropriate times and requires the use of a baseband General Purpose Input/Output (GPIO) peripheral device in order to set up the appropriate operating conditions in the RF front end block 6. The timing diagram for such an operation is similar to that of FIG. 2 and requires the RF front end block 6 to be driven by signal generated by the layer one timer 14 through the baseband GPIO peripheral device which signals are typically used for band select. Usually the layer one timer is programmed to run a frame based sequence of macro tables for TX activation and RX activation (e.g. voice call and monitoring). Since the layer one timer frame based sequence is executed in repeat mode, all timings are the same for most of the frames. This means that the layer one timer 14 has no flexibility to change the sequence, except with a fixed uncompressible advance and so the GPIO configuration cannot be changed within a frame. Furthermore, the number of macro tables held in the layer one timer is finite. The result is that different macro tables cannot be used for all the possible combinations that could occur within a frame. A solution to this problem is to use the baseband processor 12 to reconfigure the GPIO peripheral device (e.g. via DVI interrupt) but this is not highly time accurate. Another solution is to reprogram by the baseband processor 12 the layer one timer sequence, so as to avoid using macro tables for programming of the GPIO for every frame but this requires complex software.
b) BaseBand Port (BBP) dynamic receive sampling rate control which operation requires the sampling rate to be switched for example from 2x to 1x in order to reduce the current drain and requires the use of a baseband BBP peripheral device in order to set up the appropriate sampling rate. The timing diagram for such an operation is again similar to that of FIG. 2 and requires the baseband processor 12 to program the BBP peripheral device to the appropriate sampling rate. However, it is not possible to change the sampling rate using interrupts due to the short time required to change the sampling rate as described in the introduction. So, the baseband processor 12 can only reconfigure the sampling rate for cases where there is sufficient time and for such cases the current drain is typically not the highest.

For the above and similar time sensitive operations that are required in response to certain events, controlling the operation of the baseband peripheral devices in order to provide a different functionality or configuration by way of the baseband processor 12, layer one timer 14 and message handler 16 cannot be performed easily in real-time and requires processing time of the baseband processor 12. In addition, for events which require very rapid reconfiguration of the baseband peripheral devices in the order of, for example, quarter symbol or quarter chip for 2G and 3G respectively, such as dynamically controlling the BBP sampling rate, it is not possible to achieve reconfiguration in time using baseband processor interrupts.

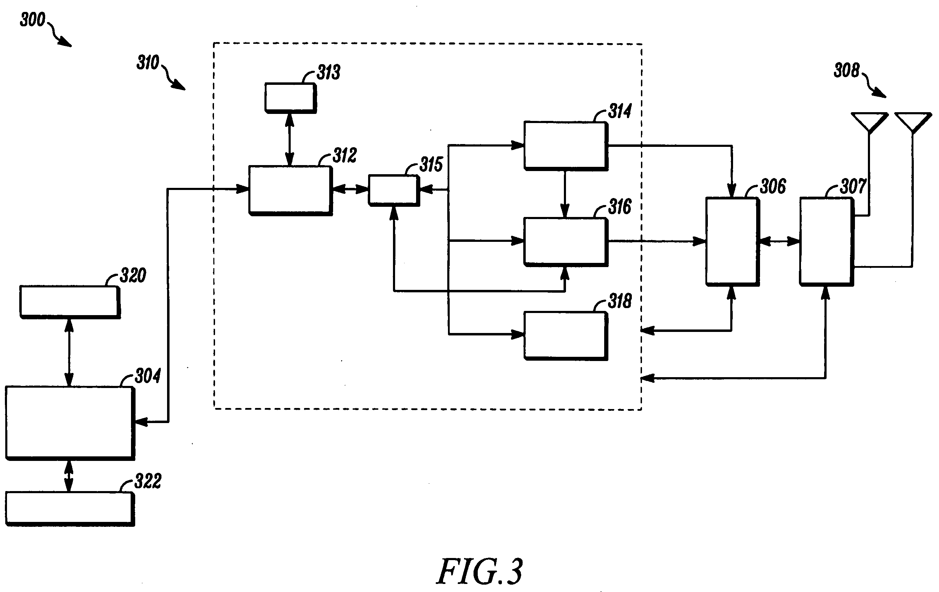

Referring now to FIG. 3 which shows a communication device, MS 300, in accordance with an embodiment of the disclosure. Like components to those of FIG. 1 are referred to be the same reference numeral plus the number 300.

The MS 300 comprises a processing unit 304 for carrying out operational processing for the MS. The MS 300 also includes RF front end block 306 and since the embodiment shown in FIG. 3 is a multi-mode MS 300, the MS 300 includes multiple antennas 308 (only two of which are shown in FIG. 3) for providing wireless communication with a BS (not shown) as is well known in the art. The RF front end block 306 typically includes an antenna switch (not shown) for switching between the transmit path and the receive path, a power amplifier (not shown), low noise amplifiers (not shown), IF synthesiser and mixers (not shown) and other elements for performing RF functions as will be known to a skilled person and thus will not be described further herein.

The MS 300 in accordance with the embodiment further comprises a RF switching block 307 typically including an antenna switch for switching between the multiple antenna paths for the aforementioned block 306 or any other transceiver within the communication device 300, as will be known to a skilled person and thus will not be described further herein.

The MS 300 further includes baseband block 310 comprising a processor 312, a timer 314, such as a layer one timer or timing block to handle time accurate signals, a message handler 316, such as a Serial Interface unit, a DMA module, a RAM module, a FIFO module or similar device for storing messages, a router 315 and a plurality of peripheral devices, only one 318 of which is shown in FIG. 3. The plurality of peripheral devices may be baseband peripheral devices such as DPLL circuitry, BaseBand Port (BBP), General Purpose Input/Output (GPIO) devices. The router 315 is coupled to each of the plurality of peripheral devices by existing communication buses used for coupling to the peripheral devices.

The message handler 316 receives from the processor 312 via the router 315 at least one message associated with one of the plurality of peripheral devices and with an event, such as a programming and/or reconfiguring event including, for example, baseband clock desense control, MS time base re-alignment, over-sampling rate dynamic setting, multiple antenna selection, or RF Chipset transfer clock speed selection, which event may be triggered by a radio air-interface event such as monitoring, receiving or transmitting signals over the radio air-interface, and transmits the at least one message to the router 315 in response to a trigger signal generated by the timer 314. Each message includes operation data for controlling the operation of a peripheral device for an event. In an embodiment, each message includes an address associated with one of the peripheral devices and operation data for controlling the operation of a peripheral device for an event, such as operating parameters to set the sampling rate of a BBP to 1x or 2x depending on the conditions. The message handler 316 can handle more than one message at a given time and the number of messages that can be handled by the message handler at any time depends on the capacity of the message handler 316. An event may require one or more messages associated with one or more peripheral devices or elements in the RF front end block 306 or the timer 314 to be posted to the message handler 316 for fetching by the router 315 in response to a trigger signal generated by the timer 314. The processor 312 posts the messages to the message handler 316 before an event or process is called by the timer 314.

The router 315 receives the at least one message transmitted by the message handler 316 and communicates the at least one message to the associated one of the plurality of peripheral devices. In an embodiment, the data in the message is written to a register or other memory associated with the peripheral device which register stores configuration data for the peripheral device. The router 315 acts as an interface between the message handler 316 and the peripheral devices and the processor 312. The router 315 can communicate any command, data, response from/to the processor 312 and to/from any peripheral device. The router 315 may also be responsible for handling bus access contention should both the message handler 316 and the processor 312 attempt to access a peripheral device concurrently, with priority always being given to the message handler. In an embodiment wherein the message includes an address associated with one of the peripheral devices, the router 315 decodes the address in the message and identifies the associated peripheral device from the decoded address and then sends the message to the identified peripheral device over an existing bus.

It will be appreciated by a skilled person that the router 315 may be implemented in logic arranged to perform the above stated functions.

In an embodiment, the baseband block 310 may further include memory 313 coupled to the processor 312 for storing data and programs containing processor instructions for operation of the processor 312, for example for controlling the posting of messages to the message handler 316. The baseband block 310 is coupled to and controlled by the processing unit 304 and is also coupled to the RF front end block 306 for processing the baseband signals received from or to be transmitted by the RF front end block 306. The processor 312 may be a DSP such as DSP56600 supplied by Freescale Semiconductor, Inc. In other embodiments, the processor 312 may be part of the processing unit 304 or the processing unit 304 may be part of the baseband block 310. The timer 314 may be part of the processor 312 or a separate element. The message handler 316 may also be part of the processor 312 or a separate element.

The MS 300 also has a Man Machine Interface MMI 320, including elements such as a key pad, microphone, speaker, display screen, for providing an interface between the MS and the user of the MS. The MMI 320 is also coupled to the processing unit 304.

The MS 300 further comprises a program memory 322 in which is stored programs containing processor instructions for operation of the MS 300. The program memory 322 is shown in FIG. 3 as a separate component of the MS 300 to the processing unit 304 but may be part of the processing unit itself. The programs in the program memory 322 may contain a number of different program elements or sub-routines containing processor instructions for a variety of different events, for example: for exchanging signals with the base station to establish a communication, for sending or receiving speech, text, multimedia or other data, for communicating with the user via the MMI 320.

The timer 314 is programmed to time the execution of events or processes in the MS 300 via the processor 312. For example, the timer 314 can assist in synchronising the operation of the MS 300 with a BS (not shown). The timer 314 in an embodiment includes a layer one timer. As discussed in the introduction, one of the features of a layer one timer is an event table, which can support, for example, one or more macro tables. A macro table can be used to define the timing for a fixed sequence of events and event codes which specify the action that is to be executed. As a macro table for an event is executed by the layer one timer 314, the layer one timer 314 generates timing signals which are transmitted to the RF front end block 306 at the appropriate time and/or trigger signals which are transmitted to the message handler 316 at the appropriate time, when an event is called. US patent no. 2005/0265507 provides more details as to the operation of a layer one timer.

On receipt of a trigger signal from the timer 314, the message handler transmits the one or more messages associated with the called event to the router 315 and the router routes each message to the associated peripheral device.

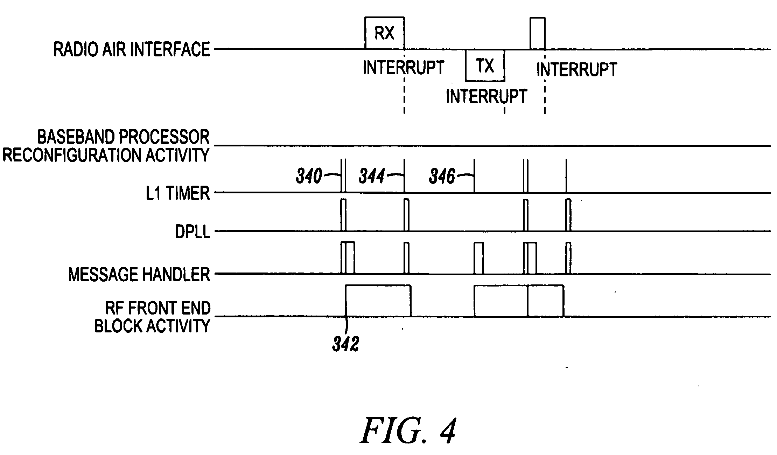

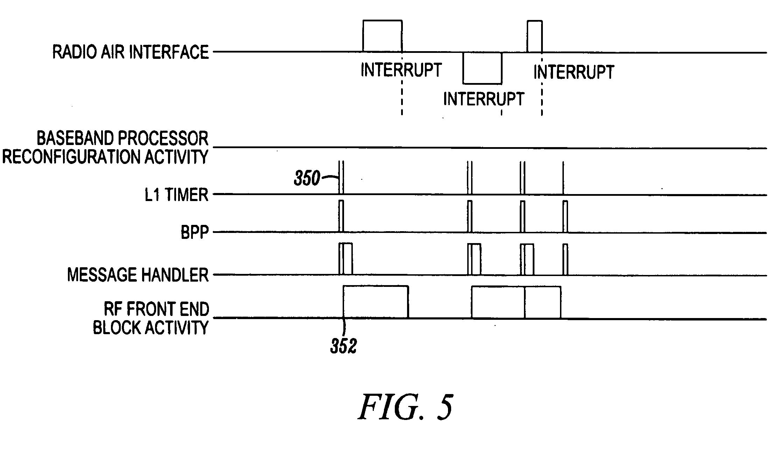

In order to describe the operation of the timer 314, message handler 316, processor 312 in more detail, a brief description of the steps that take place during an event involving DPLL desense and an event in which the sampling rate is changed will now be given with reference to FIG. 3 and FIG. 4 and FIG. 3 and FIG. 5, respectively. FIG. 4 is a timing diagram showing the activity at different elements of the MS 300 at different times during an event requiring DPLL desense. Peripheral device 318 in this example is the DPLL peripheral device. FIG. 5 is a timing diagram showing the activity at different elements of the MS 300 at different times during an event requiring the sampling rate to be switched. Peripheral device 318 in this example is the baseband BBP peripheral device. The I and Q signals generated by the RF front end block 306 are sampled by the baseband BBP peripheral device and the sampled output of the BBP peripheral device is coupled to the processor 312 for further processing as is well known in the art. By changing the operating parameters of the baseband BBP peripheral device, the sampling rate can be varied. For example, between 1x and 2x.

Due to a change in conditions such as, for example, display unit activity, adjacent RF communication device, or simply because the spectrum allocation accessed is known to interfere with the baseband clock distribution and in order to avoid harmonics interfering with the desired RF signal which results in the desense of the receiver part of the RF front end block 306, the configuration of a baseband DPLL peripheral device 318, is required to be modified in order to avoid desense of the receiver part. This is known as a DPLL desense operation.

On the occurrence of an event which requires a DPLL desense operation or event, the layer one timer 314 generates a trigger signal at time 340 which triggers the message handler 316 to provide a message associated with the DPLL desense operation to the baseband DPLL peripheral device 318 via the router 315. The message includes an address associated with the baseband DPLL peripheral device 318 to enable the router 315 to route the message to the baseband DPLL peripheral device 318 and operating parameters for the desense operation. On receipt of the message from the router 315, the operating parameters in the received message is written to the configuration register associated with the baseband DPLL peripheral device 318 such that at time 340 the operation of the baseband DPLL peripheral device 318 is reconfigured or controlled according to the operating parameters in the received message. At time 342, the layer one timer 314 generates a further trigger signal (as set out in the macro table in the timer 314 for the receive operation), which triggers the message handler 316 to provide messages to the RF front end block 306 in order to control the operation of the RF receive elements of the RF front end block 306 for a receive operation. At time 344, the layer one timer 314 generates a trigger signal which triggers the message handler 316 to provide a message associated with the DPLL desense operation to the baseband DPLL peripheral device 318 via the router 315 as discussed above. The MS 300 is thus arranged to perform a DPLL desense operation before and after a receive operation by means of the trigger signals generated by the layer one timer 314. The layer one timer 314 is also programmed to time the reconfiguration or programming of the RF front end block 306 for a transmit operation and at time 346 generates a trigger signal which is transmitted to the message handler 316 in order to control the operation of the RF transmit elements of the RF front end block 306 for a transmit operation.

Referring now to FIG. 5, when an event requiring a change in the sampling rate is called, for example, when its is determined that the sampling rate can be 1x rather than 2x which helps to limit current drain in the baseband block 310, the layer one timer 314 generates a trigger signal at time 350 which triggers the message handler 316 to provide a message associated with the dynamic sampling rate event to the baseband BPP peripheral device 318 via the router 315. The message includes an address associated with the baseband BPP peripheral device 318 to enable the router 315 to route the message to the baseband BPP peripheral device 318 and operating parameters to change the sampling rate to 1x. On receipt of the message from the router 315, the operating parameters in the received message is written to the configuration register of the baseband BPP peripheral device 318 such that at time 350 the operation of the baseband BPP peripheral device 318 is reconfigured or controlled according to the operating parameters in the received message. At time 352, the layer one timer 314 generates a further trigger signal (as set out in the macro table in the timer 314 for the dynamic sampling rate event), which triggers the message handler 316 to provide a message associated with the dynamic sampling rate operation to the RF front end block 306 in order to control the operation of the relevant part of the RF front end block 306 for the x1 or x2 sampling rate..

As can be seen from FIGs. 4 and 5, the operation of the peripheral devices, the baseband DPLL peripheral device of FIG. 4 and the baseband BPP peripheral device of FIG. 5, can be controlled by the timer 314, the message handler 316 and the router 315 for an event, such as a desense event or dynamic sampling rate, without the need to interrupt the processor 312 for reconfiguration activity. Since the layer one timer 314 generates the trigger signals which trigger the message handler 316, the messages are time accurate. Moreover, since the processor 312 is not required to reconfigure the baseband DPLL peripheral device, the reconfiguration can occur more quickly and so in real-time. Thus, the arrangement in accordance with the disclosure can ensure fast enough reconfiguration to enable sampling rates to be switched.

It will be appreciated that the arrangement in accordance with the disclosure may also be used for reconfiguring or programming elements of the RF front end block 306. In such an embodiment, the router 315 would send messages fetched from the message handler 316 to the RF front end block 306 via interfaces such as SPI blocks.

The arrangement in accordance with the disclosure can provide similar advantages with other examples of events that require time accurate control of baseband peripheral devices including:
a) Tuned antenna with multiple band dependencies which operation requires the antenna to be switched to different bands at appropriate times and requires the use of a baseband General Purpose Input/Output (GPIO) peripheral device in order to set up the appropriate operating conditions in the RF front end block 306. The timing diagram for such an operation is similar to that of FIG. 4. In another embodiment, it can be arranged such that a GPIO is not used to set up the appropriate conditions in the RF front end block 306 and instead the layer one timer is used wherein reconfiguration based on band information could be achieved by the layer one timer pins.
b) RF front end block with band dependencies.
c) Clock speed gear shifting of message handler.
d) RF activation boundary configuration (e.g. for BBP).
e) Dynamic message handler queue allocation (for single receiver architecture).
f) Reprogramming of the layer one timer in real-time.
g) Switching active devices to a low power state for power management.

Since the router 315 in accordance with the disclosure routes messages from the message handler 316 to the peripheral device associated with the message, existing buses can be used and there is no need to define new blocks to handle the different operating configurations. For example, different operating configurations can be achieved according to the content of the messages handled by the message handler 316 and the router 315 without the need for complex software solutions. Furthermore, since the messages from the message handler 316 for the peripheral devices and the messages from the processor 312 to the message handler 316 are routed through the router 315, the router 315 can handle contention and arbitration issues which exist between the processor 312 and the message handler 316 when accessing the plurality of peripheral devices.

In summary, the present disclosure provides an arrangement for communicating messages between a processor and a plurality of peripheral devices which messages can control the operation of associated peripheral devices without the use of software interrupts and in a time accurate manner by way of a timer. The present disclosure enables any peripheral device including RF elements in the RF front end block to be reconfigured and so can help to solve many real-time issues.

## Claims

1. A message handling arrangement for communicating messages between a processor (312) and a plurality of peripheral devices (318) in a communication device (300), each message including operation data for controlling the operation of a peripheral device for an event, the message handling arrangement comprising:
a timer (314) for generating trigger signals for triggering events;
a message handler (316) for receiving from the processor (312) at least one message associated with one of the plurality of peripheral devices and with an event before the event is initiated by the timer (314) and for transmitting the at least one message in response to a trigger signal generated by the timer for the event; and
a router (315) coupled to the message handler (316) for receiving the at least one message transmitted by the message handler and for communicating the at least one message to the associated one of the plurality of peripheral devices, wherein each of the at least one message includes an address of the peripheral device associated with the at least one message, wherein the router is arranged to use the address in the message to communicate the message to the associated one of the peripheral devices.

2. A processing arrangement (310) for a communication device (300) comprising:
a processor (312);
a plurality of peripheral devices (318); and
the message handling arrangement as recited in any preceding claim for communicating messages between the processor (312) and the plurality of peripheral devices (318), wherein in response to receiving a message, a peripheral device associated with the received message is arranged to control the operation of the peripheral device according to the operation data in the received message.

3. The processing arrangement of claim 2, wherein the timer (314) includes a layer 1 timer.

4. The processing arrangement of claim 2, or 3, wherein the router (315) is coupled to the processor (312) and to the message handler (316), the router being arranged to communicate messages from the processor to the message handler and from the message handler to the plurality of peripheral devices.

5. The processing arrangement of claim 2, 3, or 4, wherein the processor includes a baseband processor and the plurality of peripheral devices include a plurality of baseband peripheral devices.

6. The processing arrangement of claim 5, wherein the plurality of baseband peripheral devices include at least one of a baseband DPLL peripheral device, a baseband General Purpose Input/Output device GPIO peripheral device, a baseband port BBP peripheral device and the timer.

7. A communication device (300) including an RF front end block (306) for providing an RF receive path and an RF transmit path for the communication device and a baseband block (310) coupled to the RF front end block (306), the baseband block including a processing arrangement (310) as recited in claim 5 or 6.

8. A method of communicating messages between a processor (312) and a plurality of peripheral devices (318) in a communication device (300), each message including operation data for controlling the operation of a peripheral device for an event, the method comprising the steps of:
receiving at a message handler (316) from the processor (312) at least one message associated with one of the plurality of peripheral devices and with an event before the event is initiated by a timer (314);
generating by the timer (314) a trigger signal for initiating the event;
transmitting by the message handler the at least one message in response to the trigger signal generated by the timer;
receiving by a router (315) the at least one message transmitted by the message handler and communicating the at least one message to the associated one of the plurality of peripheral devices, wherein each of the at least one message includes an address of the peripheral device associated with the at least one message, and the router uses the address in the message to communicate the message to the associated one of the peripheral devices; and
controlling the operation of the associated one of the plurality of peripheral devices in response to the at least one message received by the associated one of the plurality of peripheral devices.

## Patentansprüche

1. Nachrichtenbehandlungsanordnung zum Kommunizieren von Nachrichten zwischen einem Prozessor (312) und mehreren Peripherievorrichtungen (318) in einer Kommunikationsvorrichtung (300), wobei jede Nachricht Betriebsdaten umfasst, um den Betrieb einer Peripherievorrichtung für ein Ereignis zu steuern, wobei die Nachrichtenbehandlungsanordnung umfasst:
einen Timer (314), um Triggersignale zum Triggern von Ereignissen zu erzeugen;
einen Nachrichten-Handler (316) zum Empfangen von mindestens einer Nachricht von dem Prozessor (312), die mit einem der mehreren Peripherievorrichtungen und mit einem Ereignis verbunden ist, bevor das Ereignis durch den Timer (314) initiiert wird, und zum Senden der mindestens einen Nachricht als Reaktion auf ein Triggersignal, das durch den Timer für das Ereignis erzeugt wird; und
einen Router (315), der mit dem Nachrichten-Handler (316) gekoppelt ist, zum Empfangen der mindestens einen Nachricht, die von dem Nachrichten-Handler gesendet wird, und zum Kommunizieren der mindestens einen Nachricht zu der verbundenen einen der mehreren Peripherievorrichtungen, wobei jede von der mindestens einen Nachricht eine Adresse der Peripherievorrichtung umfasst, die mit der mindestens einen Nachricht verbunden ist, wobei der Router ausgeführt ist, die Adresse in der Nachricht zu verwenden, um die Nachricht zu der verbundenen einen der Peripherievorrichtungen zu kommunizieren.

2. Verarbeitungsanordnung (310) für eine Kommunikationsvorrichtung (300), umfassend:
einen Prozessor (312);
mehrere Peripherievorrichtungen (318); und
die Nachrichtenbehandlungsanordnung nach irgendeinem vorstehenden Anspruch zum Kommunizieren von Nachrichten zwischen dem Prozessor (312) und den mehreren Peripherievorrichtungen (318), wobei als Reaktion auf das Empfangen einer Nachricht, eine mit der empfangenen Nachricht verbundene Peripherievorrichtung ausgeführt ist, den Betrieb der Peripherievorrichtung gemäß den Betriebsdaten in der empfangenen Nachricht zu steuern.

3. Verarbeitungsanordnung nach Anspruch 2, wobei der Timer (314) einen Schicht-1-Timer umfasst.

4. Verarbeitungsanordnung nach Anspruch 2 oder 3, wobei der Router (315) mit dem Prozessor (312) und dem Nachrichten-Handler (316) gekoppelt ist und der Router ausgeführt ist, Nachrichten von dem Prozessor zu dem Nachrichten-Handler und von dem Nachrichten-Handler zu den mehreren Peripherievorrichtungen zu kommunizieren.

5. Verarbeitungsanordnung nach Anspruch 2, 3 oder 4, wobei der Prozessor einen Basisbandprozessor umfasst und die mehreren Peripherievorrichtungen mehrere Basisbandperipherievorrichtungen umfassen.

6. Verarbeitungsanordnung nach Anspruch 5, wobei die mehreren Basisbandperipherievorrichtungen mindestens eine von einer Basisband-DPLL-Peripherievorrichtung, einer Basisband-Universal-Eingabe-/Ausgabevorrichtung-, GPIO, -Peripherievorrichtung, einer Basisband-Port-, BBP, -Peripherievorrichtung und den Timer umfassen.

7. Kommunikationsvorrichtung (300), umfassend einen RF-Frontend-Block (306) zum Bereitstellen eines RF-Empfangswegs und eines RF-Sendewegs für die Kommunikationsvorrichtung und einen Basisband-Block (310), der mit dem RF-Frontend-Block (306) gekoppelt ist, wobei der Basisband-Block eine Verarbeitungsanordnung (310) nach Anspruch 5 oder 6 umfasst.

8. Verfahren zum Kommunizieren von Nachrichten zwischen einem Prozessor (312) und mehreren Peripherievorrichtungen (318) in einer Kommunikationsvorrichtung (300), wobei jede Nachricht Betriebsdaten umfasst, um den Betrieb einer Peripherievorrichtung für ein Ereignis z steuern, wobei das Verfahren die Schritte umfasst:
Empfangen von mindestens einer Nachricht bei einem Nachrichten-Handler (316) von dem Prozessor (312), die mit einem der mehreren Peripherievorrichtungen und mit einem Ereignis verbunden ist, bevor das Ereignis durch einen Timer (314) initiiert wird;
Erzeugen eines Triggersignals durch den Timer (314) zum Initiieren des Ereignisses;
Senden der mindestens einen Nachricht durch den Nachrichten-Handler als Reaktion auf das von dem Timer erzeugte Triggersignal;
Empfangen der mindestens einen Nachricht, die von dem Nachrichten-Handler gesendet wurde, durch einen Router (315), und das Kommunizieren der mindestens einen Nachricht zu der verbundenen einen der mehreren Peripherievorrichtungen, wobei jede von der mindestens einen Nachricht eine Adresse der Peripherievorrichtung umfasst, die mit der mindestens einen Nachricht verbunden ist, und der Router die Adresse in der Nachricht verwendet, um die Nachricht zu der verbundenen einen der Peripherievorrichtungen zu kommunizieren; und
Steuern des Betriebs der verbunden einen der mehreren Peripherievorrichtungen als Reaktion auf die mindestens eine Nachricht, die von der verbundenen einen der mehreren Peripherievorrichtungen empfangen wurde.

## Revendications

1. Système de gestion des messages pour transmettre des messages entre un processeur (312) et une pluralité de périphériques (318) dans un dispositif de communication (300), chaque message contenant des données de fonctionnement pour contrôler le fonctionnement d'un périphérique pour un événement, le système de gestion des messages comprenant :
un temporisateur (314) pour générer des signaux de déclenchement pour déclencher des événements ;
un gestionnaire de messages (316) pour recevoir du processeur (312) au moins un message associé à un périphérique de la pluralité de périphériques et à un événement avant que l'événement soit déclenché par le temporisateur (314) et pour transmettre l'au moins un message en réponse à un signal de déclenchement généré par le temporisateur pour l'événement ; et
un routeur (315) couplé au gestionnaire de messages (316) pour recevoir l'au moins un message transmis par le gestionnaire de messages et pour transmettre l'au moins un message au périphérique associé de la pluralité de périphériques, où chacun de l'au moins un message comprend une adresse du périphérique associé à l'au moins un message, où le routeur est configuré de façon à utiliser l'adresse dans le message pour transmettre le message au périphérique associé de la pluralité de périphériques.

2. Un système de traitement (310) pour un dispositif de communication (300) comprenant :
un processeur (312) ;
une pluralité de périphériques (318) ; et
le système de gestion des messages décrit dans une des revendications précédentes pour transmettre des messages entre le processeur (312) et la pluralité de périphériques (318), où, en réponse à la réception d'un message, un périphérique associé au message reçu est configuré de manière à contrôler le fonctionnement du périphérique en fonction des données de fonctionnement dans le message reçu.

3. Le système de traitement de la revendication 2, dans lequel le temporisateur (314) comprend un temporisateur à couche 1.

4. Le système de traitement de la revendication 2, ou 3, dans lequel le routeur (315) est couplé au processeur (312) et au gestionnaire de messages (316), le routeur étant configuré de manière à transmettre les messages provenant du processeur au gestionnaire de messages ainsi que les messages provenant du gestionnaire de messages à la pluralité de périphériques.

5. Le système de traitement de la revendication 2, 3, ou 4, dans lequel le processeur comprend un processeur de bande de base et la pluralité de périphériques comprend une pluralité de périphériques de bande de base.

6. Le système de traitement de la revendication 5, dans lequel la pluralité de périphériques de bande de base comprend au moins un d'un périphérique DPLL de bande de base, d'un périphérique GPIO universel à dispositif d'entrée-sortie de bande de base, d'un périphérique BBP avec port de bande de base et le temporisateur.

7. Un dispositif de communication (300) comprenant un bloc frontal RF (306) pour fournir une voie de réception RF et une voie de transmission RF pour le dispositif de communication et un bloc de bande de base (310) couplé au bloc frontal RF (306), le bloc de bande de base comprenant un système de traitement (310), tel que décrit dans les revendications 5 ou 6.

8. Procédé de transmission de messages entre un processeur (312) et une pluralité de périphériques (318) dans un dispositif de communication (300), chaque message comprenant des données de fonctionnement pour contrôler le fonctionnement d'un périphérique pour un événement, le procédé comprenant les étapes suivantes :
la réception sur un gestionnaire de messages (316) depuis le processeur (312) d'au moins un message associé à un périphérique de la pluralité de périphériques et à un événement avant que l'événement soit déclenché par un temporisateur (314) ;
la génération par le temporisateur (314) d'un signal de déclenchement pour déclencher l'événement ;
la transmission par le gestionnaire de messages de l'au moins un message en réponse au signal de déclenchement généré par le temporisateur ;
la réception par le routeur (315) de l'au moins un message transmis par le gestionnaire de messages et la transmission de l'au moins un message au périphérique associé de la pluralité de périphériques, où chacun de l'au moins un message comprend une adresse du périphérique associé à l'au moins un message et le routeur utilise l'adresse dans le message pour transmettre le message au périphérique associé de la pluralité de périphériques ; et
le contrôle du fonctionnement du périphérique associé de la pluralité de périphériques en réponse à l'au moins un message reçu par le périphérique associé de la pluralité de périphériques.
